# EUROPEAN PATENT SPECIFICATION

(11) **EP 1 304 006 B1**
(45) Date of publication and mention of the grant of the patent: **24.09.2008**
(21) Application number: 01934068.6
(22) Date of filing: 29.05.2001
(51) Int. Cl.: H04Q 7/32, H04Q 7/22

(54) **MANAGING CONTROL DATA IN MOBILE STATION**
VERWALTUNG VON STEUERDATEN IN EINER MOBILSTATION
GESTION DES DONNEES DE COMMANDE DANS UNE STATION MOBILE

(30) Priority: 30.05.2000 FI 20001296
(43) Date of publication of application: 23.04.2003
(73) Proprietor: TeliaSonera Finland Oyj, 00510 Helsinki (FI)
(72) Inventor: HEINONEN, Petteri, FIN-02610 Espoo (FI)
(74) Representative: Holmström, Stefan Mikael
(86) International application number: PCT/FI2001/000514
(87) International publication number: WO 2001/093612

(56) References cited:
- WO-A1-00/10352
- WO-A1-00/40048
- WO-A1-99/01848
- WO-A2-98/56201

## Description

The invention relates to managing the functions of a mobile station and particularly to updating control data in a mobile station. Solutions are previously known wherein the user of a mobile station updates the settings of the mobile station via a network server. This allows the user for instance to use a personal computer to establish a connection to the www page (World Wide Web) of a network operator, after which the settings are transferred as an SM command (Smart Messaging) to the mobile station. Upon reception of the settings, the mobile station may inquire of the user if the settings are to be stored in the memory of the mobile station. Alternatively, the user may contact the operator by means of a short message, after which the settings are transferred to the mobile station.

The problem in the above arrangements is that the user must decide upon the retrieval of settings from a server. If the user does not know how to update the settings in a mobile station, then the settings of his mobile station do not change at all. If, again, the user knows the settings update procedure, but establishes a connection to the server only seldom, new settings are difficult to obtain rapidly to the mobile station.

Previously there is also known from WO-9901848-A1 a procedure for the control of applications stored in a subscriber identity module. This reference discloses how to store customer keys in a SIM card of a mobile station, for instance. However, it is not in all situations sufficient to store new information on a SIM card alone, as efficient management of functions of a mobile station requires that information in the mobile equipment can also be changed. WO-9901848-A1 fails to teach or disclose such a solution.

The object of the invention is thus to provide a method and equipment for implementing the method so as to solve the above problems. The object of the invention is achieved by a method of managing control data of a mobile station comprising a mobile equipment and a subscriber identity module, in which method a triggering condition is defined for changing the control data of the mobile station, the fulfilment of the triggering condition is waited for, control data are transferred to the mobile station, and the control data are stored in the mobile station. Said method is characterized by defining a control data reception command for the mobile station, storing the triggering condition in the subscriber identity module, transferring, once the triggering condition is fulfilled, to the subscriber identity module of the mobile station information from a server of a network on control data to be transferred to the mobile station, issuing the control data reception command from the subscriber identity module of the mobile station to the mobile equipment, and receiving and storing the control data according to the control data reception command in the mobile equipment.

The invention also relates to a mobile system comprising at least a mobile station operating in a mobile network and comprising a mobile equipment and a subscriber identity module, and a server in the mobile network. Said mobile system is characterized in that the subscriber identity module comprises means for storing a triggering condition, means for detecting the fulfilment of the defined triggering condition, means for receiving from said server information about the control data to be transferred to the mobile station, and means for issuing a control data reception command from said subscriber identity module to said mobile equipment based on the received information about the control data, the mobile equipment, for which a control data reception command has been defined, comprises means for receiving the control data reception command from the subscriber identity module, and means for receiving and storing the control data according to the reception command in the mobile equipment, and the server comprises means for determining the properties supported by mobile stations in the mobile network, and means for transferring the information about the control data to be transferred to the mobile station to the subscriber identity module of the mobile station in response to the fulfillment of the triggering condition such that the information to be transferred only includes control data relating to the properties supported by said mobile station.

The invention further relates to a mobile station comprising a mobile equipment and therein a subscriber identity module for storing information on a mobile subscriber, the mobile station comprising means for receiving and storing control data. Said mobile station is characterized in that the subscriber identity module comprises means for storing a triggering condition, means for detecting the fulfilment of the defined triggering condition, means for receiving information from a server of a network about the control data to be transferred to the mobile station, and means for issuing a control data reception command from said subscriber identity module to the mobile station based on the information received about the control data, and the mobile equipment, for which a control data reception command has been defined comprises means for receiving the control data reception command from the subscriber identity module, and means for receiving and storing the control data according to the reception command in the mobile equipment.

In the GSM system (Global System for Mobile Communications), a mobile subscriber is identified based on the use of a SIM card (Subscriber Identity Module). The SIM card is used in mobile equipment and it comprises information required for identifying the user and encrypting radio traffic.

The intention is not to restrict the invention to a GSM type of subscriber identity module, although the description deals with the GSM system by way of example. Instead of a detachable unit, a subscriber identity module that is a fixed part of the mobile equipment can also be used.

The invention is based on the idea of the subscriber identity module sending a command providing a chance to update control data, to the mobile equipment. The subscriber identity module itself, the user of the mobile station or a network operator may trigger the issuing of the command. Based on the command, the mobile equipment may retrieve the updates from a network server or the SIM card of the mobile station in case the control data to be changed are not included in the command. Finally, the mobile equipment stores the new control data in the right place.

The most significant advantages of the method, mobile system, mobile station and server of the invention are thus that the subscriber identity module or the SIM card manages and controls the update of the control data. This allows a user to easily make his special settings in the mobile station when moving the SIM card from one mobile equipment to another. In addition, a network operator may easily and fast update the control data or settings of a mobile station via the subscriber identity module.

In an embodiment of the invention, information is transferred from the mobile equipment to the subscriber identity module about the properties the mobile equipment supports, i.e. the allowed control data or set values to be transferred to a mobile station. The subscriber identity module is able to forward this information to the network, and only information about an update of said control data is transferred to the mobile station. If the properties of a mobile station are reported as mentioned, a network server does not have to know the properties of different mobile stations beforehand.

In a second embodiment of the invention, all control data are included in a control data reception command. This is the simplest way to transfer control data to the mobile equipment and it operates well particularly when the amount of data to be transferred is small.

In a third embodiment of the invention, the information required for retrieving control data from the subscriber identity module is included in a control data reception command. In this case, all control data to be transferred are transferred to the subscriber identity module, but they are not included in an SM command because of the large amount of data, for example.

In a fourth embodiment of the invention, information required for retrieving control data from the server in the mobile network is included in a control data reception command. In this case, the control data is not at all transferred to the mobile station beforehand, whereby the memory is not unnecessarily loaded. In this case, the command only includes e.g. an address or a file name enabling the mobile equipment to retrieve the data from the network.

In a fifth embodiment of the invention, the means for detecting the fulfilment of the triggering condition comprise means for receiving a control data update selection performed with the mobile station. This means that the user is able to select the moment when he updates the control data, controlled by the identity module.

In a sixth embodiment of the invention, the means for detecting the fulfilment of the triggering condition comprise means for receiving a command sent by a network operator. In this case, the network operator decides when control data are updated in the mobile station and transfers then to the subscriber identity module information about the control data to be transferred to the mobile station.

In a seventh embodiment of the invention, the means for detecting the fulfilment of the triggering condition comprise means for detecting that the mobile station has moved from the area of one network to the area of another network. This might mean for example that when a visiting mobile station arrives in Finland, the subscriber identity module gives, in a command, the mobile equipment the chance to retrieve settings relating to Finland to the mobile station.

In an eighth embodiment of the invention, the means for detecting the fulfilment of the triggering condition comprise means for detecting the expiration of a prescribed time. If new control data are to be received fast to the mobile station irrespective of the user's choices or the mobile station's movements, reception commands issued at given intervals may prove useful.

In a ninth embodiment of the invention, the server comprises a list of mobile station types used in the mobile system, the list indicating the properties of the mobile stations and the control data allowed to be received. In this case, the mobile equipment does not have to separately transfer information via the subscriber identity module to the network regarding the properties the mobile equipment supports, but the server is able to identify the mobile station type and, based thereon, find out which control data or set values are allowed.

The preferred embodiments of the method, mobile system and mobile station of the invention are disclosed in the attached dependent claims.

In the following, the invention will be described in detail by way of example with reference to the accompanying drawings, in which
Figure 1 is a flow diagram of the method of the invention,
Figure 2 is a block diagram of a mobile station of the invention, and
Figure 3 is a signalling diagram of the steps of the method of the invention.

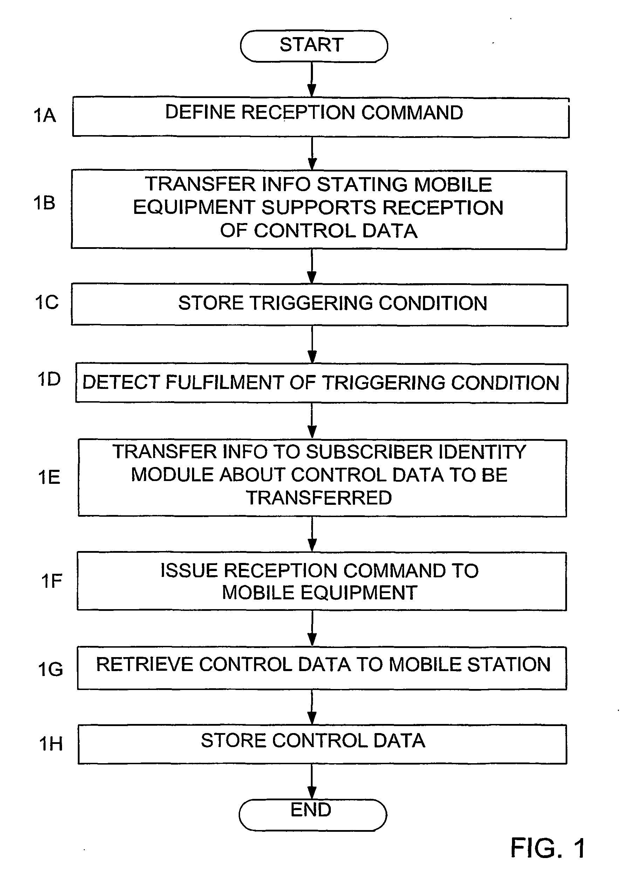

Figure 1 is a flow diagram of the method of the invention. In step 1A, a control data reception command is specified for a mobile station, and a subscriber identity module can use the command to send SM commands to mobile equipment. The command may resemble e.g. the SEND_SHORT_MESSAGE command in the ETSI GSM 11.14 standard. In step 1B, information is transferred from the mobile equipment to the subscriber identity module indicating that the mobile equipment supports change and reception of control data. This information may also be added to e.g. a TERMINAL_PROFILE command, which is also specified in the ETSI GSM 11.14 standard. Information about the properties the mobile equipment supports, i.e. which control data and set values the mobile station can receive may also be added to this command. In step 1C, a triggering condition is specified for changing the control data, and the condition is stored in the subscriber identity module. After this, the subscriber identity module has to monitor when the triggering condition is fulfilled. Examples of triggering conditions are: the mobile equipment is switched on, the user of the mobile station decides to update control data, the network operator sends a command to change the control data, the mobile station moves to the area of a new network or other events are detected in the network. The expiration of a prescribed time may also be used as a triggering condition. In step 1D, the triggering condition is found to be fulfilled. As a result, in step 1 E, information about the control data to be transferred to the mobile station is transferred from the network to the subscriber identity module. This information may include the control data to be changed or sufficient information for retrieval of the control data from the network.

For a mobile station, the control data changeable in the mobile equipment include for instance:
colour, brightness and size of display
ringing tones
profiles
user settings in WAP interface
colour of cover
modifying telephone menu in accordance with operator/user settings
settings of software loading
settings of accessories
passwords, user name for programs
prices of calls, price conditions
roaming statuses for different services
group communication settings (calls, e-mail, sms, etc.)
settings relating to security properties
certificates including public keys used in encryption

In step 1F, a control data reception command is given from the subscriber identity module to the mobile equipment, i.e. the mobile equipment is provided with the option to change the control data or settings. The command may include the control data to be changed or sufficient information for retrieving the control data from the subscriber identity module or from a server in the mobile network. If the user of the mobile station decides to accept the change in the control data, the control data are retrieved to the mobile station in step 1G or the control data included in the reception command are received. In step 1H, the changed control data are stored in the right places in the mobile station.

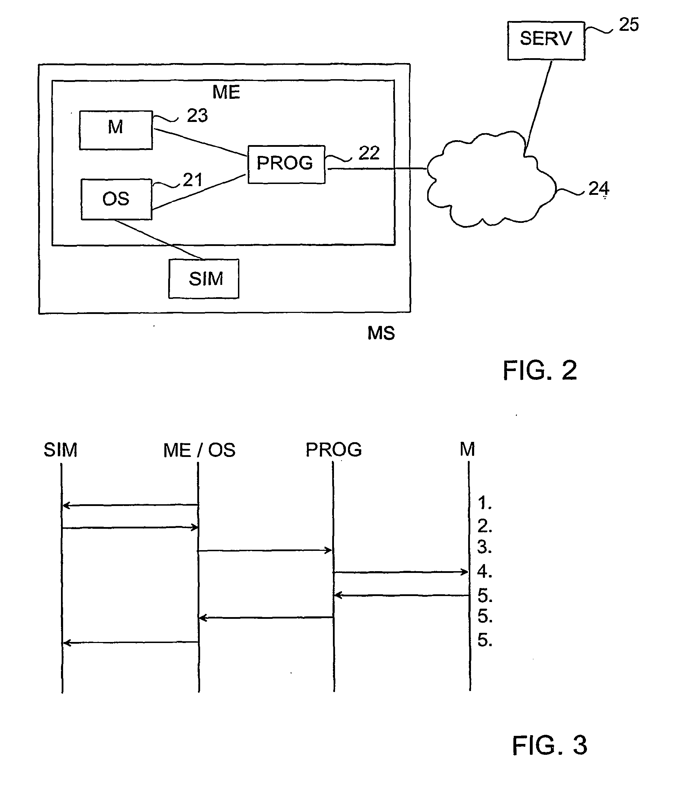

Figure 2 is a block diagram of a mobile station of the invention. The figure only shows the parts of a mobile station relevant to the invention. The mobile station MS shown comprises mobile equipment ME and a subscriber identity module SIM. The ME further comprises an operating system (OS) 21, necessary software 22 and at least one memory means 23. The SIM serves to manage and control the change in control data. The SIM commands the MS to change, i.e. retrieve, receive and store control data. The operating system 21 communicates with the SIM, i.e. for example receives signals from the SIM and forwards commands to suitable software 22. The software block 22 retrieves and stores the data, for instance. In retrieving the data from a server 25 in a network 24, the software block 22 may use different transmission links, such as a radio link, a cable or a Bluetooth link. A memory block 23 denotes the places in the MS, wherein the control data or set values are stored.

As distinct from the terminology used in the example of Figure 2, the OS block 23 may also comprise a software component, which is not an operating system of the MS, but executes the above-described functions.

Figure 3 is a signalling diagram of the steps of the method of the invention. In step 1, the mobile equipment states, e.g. in a TERMINAL_PROFILE command, that it supports changing the control data. Step 2 is not entered until the triggering condition is fulfilled and information about the control data to be changed is transferred to the SIM. In step 2, the SIM gives a control data reception command, i.e. requests that the ME start to update the control data. In the command, the SIM indicates the control data to be updated and from where they are to be retrieved. In step 3, the OS directs the command to the necessary software, which may also be part of the OS of the ME. In step 4, the control data are updated by means of the software e.g. by retrieving the control data from a server in the network of the network operator using the WAP (Wireless Application Protocol). The control data are then stored in the ME. Finally, in step 5, an acknowledgement of successful control data update is transferred to the SIM.

As distinct from the example of Figure 3, the reception command in step 2 may also include the control data, and thus they do not have to be separately retrieved from the network. A third alternative would be for the reception command to have included the necessary information for retrieving the control data from the SIM. Both solutions require that all control data be transferred to the SIM once the triggering condition is fulfilled.

It is to be understood that the above specification and the related figures are only intended to illustrate the present invention. Different variations and modifications of the invention are apparent to those skilled in the art, without deviating from the scope of the invention disclosed in the attached claims.

## Claims

1. A method of managing control data of a mobile station (MS) comprising a mobile equipment (ME) and a subscriber identity module (SIM), in which method a triggering condition is defined for changing the control data of the mobile station (MS), the fulfilment of the triggering condition is waited for, control data are transferred to the mobile station (MS), and the control data are stored in the mobile station (MS), **characterized by**
defining a control data reception command for the mobile station (MS),
storing the triggering condition in the subscriber identity module (SIM),
transferring, once the triggering condition is fulfilled, to the subscriber identity module (SIM) of the mobile station (MS) information from a server of a network on control data to be transferred to the mobile station (MS),
issuing the control data reception command from the subscriber identity module (SIM) of the mobile station (MS) to the mobile equipment (ME), and
receiving and storing the control data according to the control data reception command in the mobile equipment (ME).

2. A method of managing the control data of a mobile station (MS) as claimed in claim 1, **characterized by**
transferring, from the mobile equipment (ME) to the subscriber identity module (SIM), information indicating that the mobile equipment (ME) supports reception of control data.

3. A method of managing the control data of a mobile station (MS) as claimed in claim 1 or 2, **characterized by**
transferring, from the mobile equipment (ME) to the subscriber identity module (SIM), information about the properties the mobile equipment (ME) supports, and
giving control data reception commands relating only to these properties from the subscriber identity module (SIM) to the mobile equipment (ME).

4. A method of managing the control data of a mobile station (MS) as claimed in any one of claims 1 to 3, **characterized by**
including all control data in the control data reception command.

5. A method of managing the control data of a mobile station (MS) as claimed in any one of claims 1 to 4, **characterized by**
including the information needed to retrieve the control data from the subscriber identity module (SIM) in the control data reception command.

6. A method of managing the control data of a mobile station (MS) as claimed in any one of claims 1 to 5, **characterized by**
including the information needed to retrieve the control data from a server of the mobile network in the control data reception command.

7. A mobile system comprising at least a mobile station (MS) operating in a mobile network and comprising a mobile equipment (ME) and a subscriber identity module (SIM), and a server in the mobile network, **characterized in that**
the subscriber identity module (SIM) comprises means for storing a triggering condition, means for detecting the fulfilment of the defined triggering condition, means for receiving from said server information about the control data to be transferred to the mobile station (MS), and means for issuing a control data reception command from said subscriber identity module (SIM) to said mobile equipment (ME) based on the received information about the control data,
the mobile equipment (ME), for which a control data reception command has been defined, comprises means (21) for receiving the control data reception command from the subscriber identity module (SIM), and means (22, 23) for receiving and storing the control data according to the reception command in the mobile equipment (ME), and
the server comprises means for determining the properties supported by mobile stations in the mobile network, and means for transferring the information about the control data to be transferred to the mobile station (MS) to the subscriber identity module (SIM) of the mobile station (MS) in response to the fulfillment of the triggering condition such that the information to be transferred only includes control data relating to the properties supported by said mobile station (MS).

8. A mobile station (MS) comprising a mobile equipment (ME) and a subscriber identity module (SIM) for storing information on a mobile subscriber, the mobile station (MS) comprising means (22, 23) for receiving and storing control data, **characterized in that**
the subscriber identity module (SIM) comprises means for storing a triggering condition, means for detecting the fulfilment of the defined triggering condition, means for receiving information from a server of a network about the control data to be transferred to the mobile station (MS), and means for issuing a control data reception command from said subscriber identity module (SIM) to the mobile equipment (ME) based on the information received about the control data, and
the mobile equipment (ME), for which a control data reception command has been defined, comprises means for receiving (21) the control data reception command from the subscriber identity module (SIM), and means (21, 22, 23) for receiving and storing the control data according to the reception command in the mobile equipment (ME).

9. A mobile station (MS) as claimed in claim 8, **characterized in that**
the means (21, 22, 23) for receiving the control data comprise means for retrieving the control data from the subscriber identity module (SIM) in accordance with the information included in the reception command.

10. A mobile station (MS) as claimed in claim 8 or 9, **characterized in that**
the means (21, 22, 23) for receiving the control data comprise means for retrieving the control data from a server of the mobile network in accordance with the information included in the reception command.

11. A mobile station (MS) as claimed in any one of claims 8 to 10, **characterized in that**
the means for detecting the fulfilment of the triggering condition comprise means for receiving a control data update selection performed with the mobile station (MS).

12. A mobile station (MS) as claimed in any one of claims 8 to 10, **characterized in that**
the means for detecting the fulfilment of the triggering condition comprise means for receiving a command sent by a network operator.

13. A mobile station (MS) as claimed in any one of claims 8 to 10, **characterized in that**
the means for detecting the fulfilment of the triggering condition comprise means for detecting the movement of the mobile station (MS) from the area of one network to the area of another network.

14. A mobile station (MS) as claimed in any one of claims 8 to 10, **characterized in that**
the means for detecting the fulfilment of the triggering condition comprise means for detecting the expiration of a prescribed time.

## Patentansprüche

1. Verfahren zum Verwalten von Steuerdaten einer Mobilstation (MS), die ein Mobilgerät (ME) und ein Teilnehmeridentitätsmodul (SIM) aufweist, wobei bei diesem Verfahren eine Triggerbedingung zum Ändern der Steuerdaten der Mobilstation (MS) definiert wird, auf das Erfüllen der Triggerbedingung gewartet wird, die Steuerdaten zu der Mobilstation (MS) gesendet werden und die Steuerdaten in der Mobilstation (MS) gespeichert werden, ***gekennzeichnet durch***
Definieren einer Steuerdaten-Empfangsanweisung für die Mobilstation (MS),
Speichern der Triggerbedingung in dem Teilnehmeridentitätsmodul (SIM),
Senden einer Information von einem Server eines Netzes über Steuerdaten, die zu der Mobilstation (MS) zu senden sind, zu dem Teilnehmeridentitätsmodul (SIM), wenn die Triggerbedingung erfüllt ist,
Ausgeben der Steuerdaten-Empfangsanweisung von dem Teilnehmeridentitätsmodul (SIM) der Mobilstation (MS) zu dem Mobilgerät (ME), und
Empfangen und Speichern der Steuerdaten gemäß der Steuerdaten-Empfangsanweisung in dem Mobilgerät (ME).

2. Verfahren zum Verwalten der Steuerdaten einer Mobilstation (MS) nach Anspruch 1, ***gekennzeichnet durch***
Senden einer Information, die anzeigt, dass das Mobilgerät (ME) ein Empfangen von Steuerdaten unterstützt, von dem Mobilgerät (ME) zu dem Teilnehmeridentitätsmodul (SIM).

3. Verfahren zum Verwalten der Steuerdaten einer Mobilstation (MS) nach Anspruch 1 oder 2, ***gekennzeichnet durch***
Senden einer Information über die Eigenschaften, die das Mobilgerät (ME) unterstützt, von dem Mobilgerät (ME) zu dem Teilnehmeridentitätsmodul (SIM), und
Geben von Steuerdaten-Empfangsanweisungen, die sich auf lediglich diese Eigenschaften beziehen, von dem Teilnehmeridentitätsmodul (SIM) zu dem Mobilgerät (ME).

4. Verfahren zum Verwalten der Steuerdaten einer Mobilstation (MS) nach einem der Ansprüche 1 bis 3, ***gekennzeichnet durch***
Einschfießen von allen Steuerdaten in die Steuerdaten-Empfangsanweisung.

5. Verfahren zum Verwalten der Steuerdaten einer Mobilstation (MS) nach einem der Ansprüche 1 bis 4, ***gekennzeichnet durch***
Einschließen der Information, die erforderlich ist, um die Steuerdaten von dem Teilnehmeridentitätsmodul (SIM) abzurufen, in die Steuerdaten-Empfangsanweisung.

6. Verfahren zum Verwalten der Steuerdaten einer Mobilstation (MS) nach einem der Ansprüche 1 bis 5, ***gekennzeichnet durch***
Einschließen der Information, die erforderlich ist, um die Steuerdaten von einem Server des Mobilnetzes abzurufen, in die Steuerdaten-Empfangsanweisung.

7. Mobilsystem, das mindestens eine Mobilstation (MS), die in einem Mobilnetz arbeitet und ein Mobilgerät (ME) und ein Teilnehmeridentitätsmodul (SIM) aufweist, und einen Server in dem Mobilnetz aufweist, ***dadurch gekennzeichnet, dass***
das Teilnehmeridentitätsmodul (SIM) eine Einrichtung zum Speichern einer Triggerbedingung, eine Einrichtung zum Erfassen des Erfüllens der definierten Triggerbedingung, eine Einrichtung zum Empfangen einer Information über die Steuerdaten, die zu der Mobilstation (MS) zu senden sind, von dem Server, und eine Einrichtung zum Ausgeben einer Steuerdaten-Empfangsanweisung von dem Teilnehmeridentitätsmodul (SIM) zu dem Mobilgerät auf der Grundlage der empfangenen Information über die Steuerdaten aufweist,
das Mobilgerät (ME), für welches eine Steuerdaten-Empfangsanweisung definiert worden ist, eine Einrichtung (21) zum Empfangen der Steuerdaten-Empfangsanweisung von dem Teilnehmeridentitätsmodul (SIM) und eine Einrichtung (22, 23) zum Empfangen und Speichern der Steuerdaten gemäß der Empfangsanweisung in dem Mobilgerät (ME) aufweist, und
der Server eine Einrichtung zum Bestimmen der Eigenschaften, die von Mobilstationen in dem Mobilnetz unterstützt werden, und eine Einrichtung zum derartigen Senden der Information über die Steuerdaten, die zu der Mobilstation (MS) zu senden sind, zu dem Teilnehmeridentitätsmodul (SIM) der Mobilstation (MS) aufweist, dass die zu sendende Information lediglich Steuerdaten einschließt, die sich auf die Eigenschaften beziehen, die von der Mobilstation (MS) unterstützt werden.

8. Mobilstation (MS), die ein Mobilgerät (ME) und ein Teilnehmeridentitätsmodul (SIM) zum Speichern einer Information bezüglich eines mobilen Teilnehmers aufweist, wobei die Mobilstation (MS) eine Einrichtung (22, 23) zum Empfangen und Speichern von Steuerdaten aufweist, ***dadurch gekennzeichnet, dass***
das Teilnehmeridentitätsmodul (SIM) eine Einrichtung zum Speichern einer Triggerbedingung, eine Einrichtung zum Erfassen des Erfüllen der definierten Triggerbedingung, eine Einrichtung zum Empfangen einer Information über die Steuerdaten, die zu der Mobilstation (MS) zu senden sind, von dem Server, und eine Einrichtung zum Ausgeben einer Steuerdaten-Empfangsanweisung von dem Teilnehmeridentitätsmodul (SIM) zu dem Mobilgerät auf der Grundlage der empfangenen Information über die Steuerdaten aufweist, und
das Mobilgerät (ME), für welches eine Steuerdaten-Empfangsanweisung definiert worden ist, eine Einrichtung (21) zum Empfangen der Steuerdaten-Empfangsanweisung von dem Teilnehmeridentitätsmodul (SIM) und eine Einrichtung (21, 22, 23) zum Empfangen und Speichern der Steuerdaten gemäß der Empfangsanweisung in dem Mobilgerät (ME) aufweist.

9. Mobilstation (MS) nach Anspruch 8, ***dadurch gekennzeichnet, dass***
die Einrichtung (21, 22, 23) zum Empfangen der Steuerdaten eine Einrichtung zum Abrufen der Steuerdaten von dem Teilnehmeridentitätsmodul (SIM) gemäß der Information aufweist, die in der Empfangsanweisung eingeschlossen ist.

10. Mobilstation (MS) nach Anspruch 8 oder 9, ***dadurch gekennzeichnet, dass***
die Einrichtung (21, 22, 23) zum Empfangen der Steuerdaten eine Einrichtung zum Abrufen der Steuerdaten von einem Server eines Mobilnetzes gemäß der Information aufweist, die in der Empfangsanweisung eingeschlossen ist.

11. Mobilstation (MS) nach einem der Ansprüche 8 bis 10, ***dadurch gekennzeichnet, dass***
die Einrichtung zum Erfassen des Erfüllens der Triggerbedingung eine Einrichtung zum Empfangen einer Steuerdaten-Aktualisierungsauswahl aufweist, die mit der Mobilstation (MS) durchgeführt wird.

12. Mobilstation (MS) nach einem der Ansprüche 8 bis 10, ***dadurch gekennzeichnet, dass***
die Einrichtung zum Erfassen des Erfüllen der Triggerbedingung eine Einrichtung zum Empfangen einer Anweisung aufweist, die von einem Netzbetreiber gesendet wird.

13. Mobilstation (MS) nach einem der Ansprüche 8 bis 10, ***dadurch gekennzeichnet, dass***
die Einrichtung zum Erfassen des Erfüllens der Triggerbedingung eine Einrichtung zum Erfassen der Bewegung der Mobilstation (MS) von dem Bereich eines Netzes zu dem Bereich eines anderen Netzes aufweist.

14. Mobilstation (MS) nach einem der Ansprüche 8 bis 10, ***dadurch gekennzeichnet dass***
die Einrichtung zum Erfassen des Erfüllens der Triggerbedingung eine Einrichtung zum Erfassen des Verstreichens einer vorgeschriebenen Zeit aufweist.

## Revendications

1. Procédé de gestion des données de service d'une station mobile (MS) comprenant un équipement mobile (ME) et un module d'identification d'abonné (SIM), procédé dans lequel une condition de déclenchement est définie pour modifier les données de service de la station mobile (MS), l'exécution de la condition de déclenchement est attendue, les données de service sont transférées à la station mobile (MS), et les données de service sont stockées dans la station mobile (MS), **caractérisée par** le fait de
définir une commande de réception des données de service pour la station mobile (MS),
stocker la condition de déclenchement dans le module d'identification d'abonné (SIM),
transférer, une fois que la condition de déclenchement est exécutée, vers le module d'identification d'abonné (SIM) de la station mobile (MS), des informations en provenance d'un serveur d'un réseau, qui concernent des données de service à transférer à la station mobile (MS),
émettre la commande de réception de données de service en provenance du module d'identification d'abonné (SIM) de la station mobile (MS) vers l'équipement mobile (ME), et
recevoir et stocker les données de service selon la commande de réception des données de service dans l'équipement mobile (ME).

2. Procédé de gestion des données de service d'une station mobile (MS) selon la revendication 1, **caractérisé par** le fait de
transférer, à partir de l'équipement mobile (ME) vers le module d'identification d'abonné (SIM), des informations qui indiquent que l'équipement mobile (ME) supporte la réception des données de service.

3. Procédé de gestion des données de service d'une station mobile (MS) selon la revendication 1 ou la revendication 2, **caractérisé par** le fait de
transférer, à partir de l'équipement mobile (ME) vers le module d'identification d'abonné (SIM), des informations qui concernent les propriétés que l'équipement mobile (ME) supporte, et
donner des commandes de réception de données de service qui concernent seulement ces propriétés, en provenance du module d'identification d'abonné (SIM) vers l'équipement mobile (ME).

4. Procédé de gestion des données de service d'une station mobile (MS) selon l'une quelconque des revendications 1 à 3, **caractérisé par** le fait de
inclure toutes les données de service dans la commande de réception des données de service.

5. Procédé de gestion des données de service d'une station mobile (MS) selon l'une quelconque des revendications 1 à 4, **caractérisé par** le fait de
inclure les informations nécessaires pour rechercher les données de service en provenance du module d'identification d'abonné (SIM), dans la commande de réception des données de service.

6. Procédé de gestion des données de service d'une station mobile (MS) selon l'une quelconque des revendications 1 à 5, **caractérisé par** le fait de
inclure les informations nécessaires pour rechercher les données de service en provenance d'un serveur du réseau mobile, dans la commande de réception des données de service.

7. Système mobile comprenant au moins une station mobile (MS) fonctionnant dans un réseau mobile et comprenant un équipement mobile (ME) et un module d'identification d'abonné (SIM), et un serveur dans le réseau mobile, **caractérisé en ce que**
le module d'identification d'abonné (SIM) comprend des moyens pour stocker une condition de déclenchement, des moyens pour détecter l'exécution de la condition de déclenchement définie, des moyens pour recevoir en provenance dudit serveur des informations qui concernent les données de service à transférer vers la station mobile (MS), et des moyens pour émettre une commande de réception des données de service en provenance dudit module d'identification d'abonné (SIM) vers ledit équipement mobile (ME) sur la base des informations qui concernent les données de service,
l'équipement mobile (ME), pour lequel une commande de réception des données de service a été définie, comprend des moyens (21) pour recevoir la commande de réception des données de service en provenance du module d'identification d'abonné (SIM), et des moyens (22, 23) pour recevoir et stocker les données de service selon la commande de réception dans l'équipement mobile (ME), et
le serveur comprend des moyens pour déterminer les propriétés supportées par les stations mobiles dans le réseau mobile, et des moyens pour transférer les informations qui concernent les données de service à transférer à la station mobile (MS), au module d'identification d'abonné (SIM) de la station mobile (MS) en réponse à l'exécution de la condition de déclenchement de telle sorte que les informations à transférer incluent seulement des données de service qui concernent les propriétés supportées par ladite station mobile (MS).

8. Station mobile (MS) comprenant un équipement mobile (ME) et un module d'identification d'abonné (SIM) pour stocker des informations qui concernent un abonné mobile, la station mobile (MS) comprenant des moyens (22, 23) pour recevoir et stocker des données de service, **caractérisés en ce que**
le module d'identification d'abonné (SIM) comprend des moyens pour stocker une condition de déclenchement, des moyens pour détecter l'exécution de la condition de déclenchement définie, des moyens pour recevoir, en provenance d'un serveur d'un réseau, des informations qui concernent les données de service à transférer vers la station mobile (MS), et des moyens pour émettre une commande de réception des données de service en provenance dudit module d'identification d'abonné (SIM) vers ledit équipement mobile (ME) sur la base des informations qui concernent les données de service, et
l'équipement mobile (ME), pour lequel une commande de réception des données de service a été définie, comprend des moyens (21) pour recevoir la commande de réception des données de service en provenance du module d'identification d'abonné (SIM), et des moyens (21, 22, 23) pour recevoir et stocker les données de service selon la commande de réception dans l'équipement mobile (ME).

9. Station mobile (MS) selon la revendication 8, **caractérisée en ce que**
les moyens (21, 22, 23) pour recevoir les données de service comprennent des moyens pour rechercher les données de service en provenance du module d'identification d'abonné (SIM) selon les informations incluses dans la commande de réception.

10. Station mobile (MS) selon la revendication 8 ou la revendication 9, **caractérisée en ce que**
les moyens (21, 22, 23) pour recevoir les données de service comprennent des moyens pour rechercher les données de service en provenance d'un serveur du réseau mobile selon les informations incluses dans la commande de réception.

11. Station mobile (MS) selon l'une quelconque des revendications 8 à 10, **caractérisée en ce que**
les moyens pour détecter l'exécution de la condition de déclenchement comprennent des moyens pour recevoir une sélection de mise à jour des données de service exécutée avec la station mobile (MS).

12. Station mobile (MS) selon l'une quelconque des revendications 8 à 10, **caractérisée en ce que**
les moyens pour détecter l'exécution de la condition de déclenchement comprennent des moyens pour recevoir une commande envoyée par un opérateur de réseau.

13. Station mobile (MS) selon l'une quelconque des revendications 8 à 10, **caractérisée en ce que**
les moyens pour détecter l'exécution de la condition de déclenchement comprennent des moyens pour détecter le déplacement de la station mobile (MS) à partir de la zone d'un réseau vers la zone d'un autre réseau.

14. Station mobile (MS) selon l'une quelconque des revendications 8 à 10, **caractérisée en ce que**
les moyens pour détecter l'exécution de la condition de déclenchement comprennent des moyens pour détecter l'expiration d'un temps prescrit.
